# EUROPÄISCHE PATENTSCHRIFT

(11) **EP 1 397 187 B1**
(45) Veröffentlichungstag und Bekanntmachung des Hinweises auf die Patenterteilung: **20.10.2010**
(21) Anmeldenummer: 02735381.2
(22) Anmeldetag: 24.05.2002
(51) Int. Cl.: B01D 17/00

(54) **VORRICHTUNG ZUM TRENNEN VON FLUIDGEMISCHEN**
DEVICE FOR SEPARATING FLUID MIXTURES
DISPOSITIF POUR LA SEPARATION DE MELANGES DE FLUIDES

(30) Priorität: 16.06.2001 DE 10129100
(43) Veröffentlichungstag der Anmeldung: 17.03.2004
(73) Patentinhaber: HYDAC FILTERTECHNIK GMBH, 66280 Sulzbach/Saar (DE)
(72) Erfinder: HERGES, Knut, 66583 Spiesen-Elversberg (DE); BUSCH, Andreas, 66571 Eppelborn (DE)
(74) Vertreter: Bartels, Martin Erich Arthur
(86) Internationale Anmeldenummer: PCT/EP2002/005695
(87) Internationale Veröffentlichungsnummer: WO 2002/102489

(56) Entgegenhaltungen:
- EP-A- 0 733 389
- DE-A- 19 637 313
- GB-A- 848 817
- US-A- 4 089 662
- US-A- 6 042 718

## Beschreibung

Die Erfindung betrifft eine Vorrichtung zum Trennen von Fluidgemischen, insbesondere Wasser von Öl, gemäß der Merkmalsausgestaltung des Oberbegriffes des Patentanspruches 1.

Bei einer gattungsfremden Vorrichtung zum Trennen eines Öl/Wasser-Gemisches nach der EP 0 148 444 A2 ist ein Vorabscheideraum vorgesehen, in dem zunächst die gröberen Bestandteile des Öls von dem Gemisch abgetrennt werden. Das derart vorgereinigte Gemisch wird dann in eine Koaleszierkammer eingeleitet, die eine Vielzahl von Koaleszierkörpem enthält, die aus einem oleophilen Kunststoff bestehen und leichter als Wasser sind. An der oleophilen spezifisch großen Oberfläche dieser Körper setzen sich auch feinste Ölpartikel ab, die auf den Körpern zusammenfließen und als größere, leicht abtrennbar Öltropfen in den Abscheideraum aufsteigen, wo sie in einem Ölsammelraum sich ansammeln und entfernt werden können. Aus dem Abscheideraum selbst fließt das Wasser über eine Trennwand durch ein weiteres Rohr ab. Diese bekannte Vorrichtung baut groß auf und, obwohl mit ihr eine Ölabscheidung über einen langen Zeitraum wartungsfrei ist, sind die oleophilen Koaleszierkörper von Zeit zu Zeit gegen neue auszutauschen, was mithin zu Stillstandszeiten der Anlage führt. Im Hinblick auf die Baugröße der Anlage ist die Austragsleistung an von einander getrenntem Öl und Wasser relativ gering. Insbesondere bei kalten Umgebungsbedingungen und mithin kalten zu trennenden Fluidgemischen ist mit der bekannten Lösung die Entwässerungsleistung, insbesondere die Geschwindigkeit, mit der die Entwässerung vonstatten geht, unzureichend.

Durch die EP 0 733 389 B1 ist eine Vorrichtung zum Trennen von Fluidgemischen bekannt, insbesondere von Öl und Wasser, mit einem Vakuumbehälter, in dem dieses Fluidgemisch mittels einer Zerstäubungseinrichtung zerstäubbar ist, wobei mindestens eine flüssige Komponente des Fluidgemisches nach seiner Auftrennung aus dem Vakuumbehälter ableitbar ist und die jeweils anderen Komponenten sind mittels einer Vakuumpumpe aus dem Vakuumbehälter gas- und/oder dampfförmig absaugbar. Die bekannte Zerstäubungseinrichtung weist eine Zerstäuberdüse für das Fluidgemisch auf, wobei die flüssige Komponente mittels einer von einem Hydromotor antreibbaren Hydropumpe ableitbar ist, die eine innerhalb des Vakuumbehälters angeordnete Baueinheit bilden. Der angesprochene Hydromotor ist von dem mittels eines weiteren Antriebs in Bewegung setzbaren Fluidgemisch antreibbar, sobald ein vorgebbarer Füllstand im Vakuumbehälter den Austrag der jeweils flüssigen Komponente mittels der Hydropumpe erfordert. Aufgrund der Zerstäubungseinrichtung ist es möglich, bei geringer Baugröße der Vorrichtung eine nahezu optimale Trennung der Komponenten zu erreichen, wobei die dahingehende Auftrennung im Hinblick auf den Energieeintrag auch wirtschaftlich günstig ist. Es hat sich aber gezeigt, daß insbesondere bei Anwendungsfällen, bei niedrigen und tiefen Temperaturen die Zerstäubungseinrichtung anfällig und nicht besonders geeignet ist.

Die US-A-6 042 718 beschreibt eine gattungsgemäße Vorrichtung zum Trennen eines Gemisches aus Wasser und Öl, mit einem mehrere Teilräume aufweisenden Vakuumbehälter, einer Fördereinrichtung zum Abtransportieren einer flüssigen Komponente des Gemisches nach seiner Auftrennung aus dem Vakuumbehälter sowie einer Vakuumpumpe zum Absaugen in gas-/dampfförmiger Form der jeweils anderen Komponenten aus dem Vakuumbehälter. Der erste Teilraum der Vorrichtung nimmt eine Heizeinrichtung auf, die der Beheizung des Gemisches dient. Die bekannte Vorrichtung umfaßt auch ein Füllkörperbett, in dem das Gemisch die Auftrennung in seine Komponenten erfährt.

Ausgehend von dem vorstehend bezeichneten Stand oder Technik liegt der Erfindung die Aufgabe zugrunde, eine Vorrichtung zum Trennen von Fluidgemischen, insbesondere von Öl und Wasser, bei geringer Baugröße zu schaffen, die eine optimale Trennung der Komponenten erlaubt sowie sich wirtschaftlich günstig betreiben läßt, wobei sie auch bei niedrigen und tiefen Temperaturen einsetzbar ist. Eine dahingehende Aufgabe löst eine Vorrichtung mit den Merkmalen des Patentanspruches 1.

Dadurch, daß gemäß dem kennzeichnenden Teil des Patentanspruches 1 der eine Teilraum mit der integrierten Heizeinrichtung sich längs des gesamten Vakuumbehälters erstreckt, daß der zweite Teilraum mit dem Füllkörperbett den ersten Teilraum umfaßt und daß ein weiterer dritter Teilraum koaxial zum zweiten Teilraum und in Längsrichtung des Vakuumbehälters diesem nachfolgend gleichfalls den ersten Teilraum umfaßt, ist durch die genannte Unterteilung in verschiedene Teilräume innerhalb des Vakuumbehälters sichergestellt, daß die gesamte Vorrichtung zwar insgesamt bauraumsparend ausgeführt ist, daß aber dennoch die Heizeinrichtung viel Bauraum innerhalb des Vakuumbehälters einnehmen kann, was insofern vorteilhaft ist, als dann das Fluidgemisch über eine sehr lange Strecke längs der Heizeinrichtung geführt werden kann. Über den weiteren Teilraum mit dem Füllkörperbett ist dann eine entsprechend längere Verweildauer in dem zweiten Teilraum sichergestellt, so daß auch für den Auftrenn- oder Entgasungsvorgang ein längerer Zeitraum zur Verfügung steht. Über den weiteren dritten Teilraum ist dann ein rascher Abfluß der abgetrennten flüssigen Teile aus dem Vakuumbehälter nach außen hin möglich.

Mittels der Heizeinrichtung lassen sich auch kalte und mithin zähe Fluidgemische einer Auftrennung innerhalb des genannten Vakuumbehälters zuführen. Damit wird die erfindungsgemäße Auftrennvorrichtung auch interessant für den Einsatz bei Baumaschinen und Militärfahrzeugen, wo außerhalb von Wartungseinrichtungen mit der entsprechenden Gebäudeausrüstung, also auch im Freien, die Wartung von Hydrauliköl vorgenommen werden kann, indem man das Wasser aus dem Öl abscheidet. Eine andere Anwendung besteht auch in der Trennung von Wasser von Benzin oder Wasser von Kerosin, beispielsweise bei Luftfahrzeugen.

Die Heizeinrichtung, vorzugsweise in Form einer elektrisch betreibbaren Heizeinrichtung, ist von ihrer Heizleistung her regulierbar und kann auch abgestellt werden, so daß in einem weiten Bereich an Temperaturen des Fluidgemisches dieses sich sinnvoll im Sinne einer Auftrennung innerhalb der Trennvorrichtung handhaben läßt. Durch die Integration der Heizeinrichtung in einen Teilraum des Vakuumbehälters wird erreicht, daß nur ein geringer Anteil an Wärme an die Umgebung wiederum abgegeben wird, was zu einem verbesserten Wirkungsgrad führt und im übrigen die Entwässerungsgeschwindigkeit auch verbessert.

Bei einer weiteren bevorzugten Ausführungsform der erfindungsgemäßen Vorrichtung ist in einem vierten Teilraum, der sich parallel zum ersten Teilraum innerhalb des gesamten Vakuumbehälters erstreckt, eine Niveauüberwachungseinrichtung angeordnet, die Auskunft über den Füllzustand des Vakuumbehälters bezogen auf die jeweils flüssige Komponente gibt. Vorzugsweise ist dabei vorgesehen, daß die Niveauüberwachungseinrichtung eine erste Fördereinrichtung derart ansteuert, daß bei Unterschreiten einer vorgegebenen Füllstandsgrenze innerhalb des Vakuumbehälters die flüssige, den Behälter verlassende Komponente an den ersten Teilraum mit der Heizeinrichtung weitergeleitet ist. Unabhängig vom Befüllungszustand der Trennvorrichtung und insbesondere des Vakuumbehälters ist es mithin möglich, einen kontinuierlich fortlaufenden Trennprozeß zu führen, der insbesondere auch davon unabhängig ist, wieviel aufzutrennendes Fluidgemisch von außen her der Trennvorrichtung zugeführt wird. Neben diesem quasi kontinuierlichen Betrieb, der im übrigen vom Energieeintrag her günstig verläuft, kann darüber hinaus bereits aufgetrenntes Fluidgemisch nochmals der eigentlichen Trennvorrichtung zugeführt werden, um dergestalt in einem weiteren Auftrennprozeß die Auftrennergebnisse zu verbessern. Dahingehend ist dann sichergestellt, daß nahezu vollständig von Luft und Wasser befreites Fluid die Trennvorrichtung für seine weitere Anwendung verläßt.

Bei einer weiteren bevorzugten Ausführungsform der erfindungsgemäßen Vorrichtung entnimmt eine weitere Fördereinrichtung über eine Filtereinheit das Fluidgemisch aus einer Entnahmestelle, wobei die erste Fördereinrichtung über eine Schalteinrichtung alternativ zu der Abgabe an die Heizeinrichtung die flüssige Komponente an die Entnahmestelle abgibt. Zeigt die Niveauüberwachungseinrichtung, daß der Füllstand innerhalb des Vakuumbehälters und insbesondere im vierten Teilraum desselben zu hoch ist, wird ein Schaltventil entsprechend betätigt und über die erste Fördereinrichtung, insbesondere in Form einer Motor-Hydropumpeneinheit, die flüssige Fluidkomponente unmittelbar an die Entnahmestelle weitergeleitet, aus der auch wiederum die Trennvorrichtung das Fluidgemisch mittels der zweiten Fördereinrichtung entnimmt. Die dahingehend gemeinsame Entnahmestelle kann beispielsweise durch den Fluidtank einer Baumaschine oder eines Militärfahrzeuges, wie ein Panzer oder Schützenwagen, gebildet sein.

Bei einer weiteren bevorzugten Ausführungsform der erfindungsgemäßen Vorrichtung greift die Vakuumpumpe mit ihrer Saugkraft an der Oberseite des Vakuumbehälters an, wobei in einer gegenläufigen Richtung des Fluidgemisches von oben nach unten der zweite Teilraum mit dem Füllkörperbett durchströmt ist. Durch die dahingehend obere Anordnung der Vakuumpumpe sowie durch das Gegenstromprinzip innerhalb des Vakuumbehälters ist eine hohe Auftrennrate sichergestellt und im übrigen ein strömungstechnisch günstiger Ablauf innerhalb des Vakuumbehälters für das jeweils strömende Medium erreicht.

Bei einer weiteren bevorzugten Ausführungsform der erfindungsgemäßen Vorrichtung ist der Vakuumbehälter an eine Luftzufuhr anschließbar, und zwar vorzugsweise über eine Filtereinheit und eine einstellbare Drossel. Dergestalt läßt sich dann gereinigte Luft in vorgebbaren Mengen dem Vakuumbehälter zuführen, um dergestalt den jeweiligen Unterdruck im Vakuumbehälter vorgeben und einstellen zu können. Vorzugsweise ist dabei des weiteren vorgesehen, daß der fluidführende Anschluß zu der Heizeinrichtung und Teile der Fluidleitungen in der Fördereinrichtung, die jeweils von einer Hydropumpe versorgt sind, in ein gemeinsames Anschlußstück münden. Dergestalt läßt sich der freie Weg und der Einsatz an Verrohrrungen vermindern.

Sofern die Vorrichtung mit allen ihren Komponenten verfahrbar in einer Transporteinheit zusammengefaßt ist, läßt sich die Trennvorrichtung vor Ort einsetzen, so daß bei einer militärischen Verwendung ein Militärfahrzeug auch im freien Feld gewartet und instandgesetzt werden kann.

Im folgenden wird die erfindungsgemäße Trennvorrichtung anhand einer Ausführungsform nach der Zeichnung näher erläutert. Dabei zeigen in prinzipieller und nicht maßstäblicher Darstellung die
- Fig. 1: den grundsätzlichen Schaltplanaufbau der Trennvorrichtung;
- Fig.2: die die Schaltung nach Fig.1 realisierende Trennvorrichtung als mobile Transporteinheit.

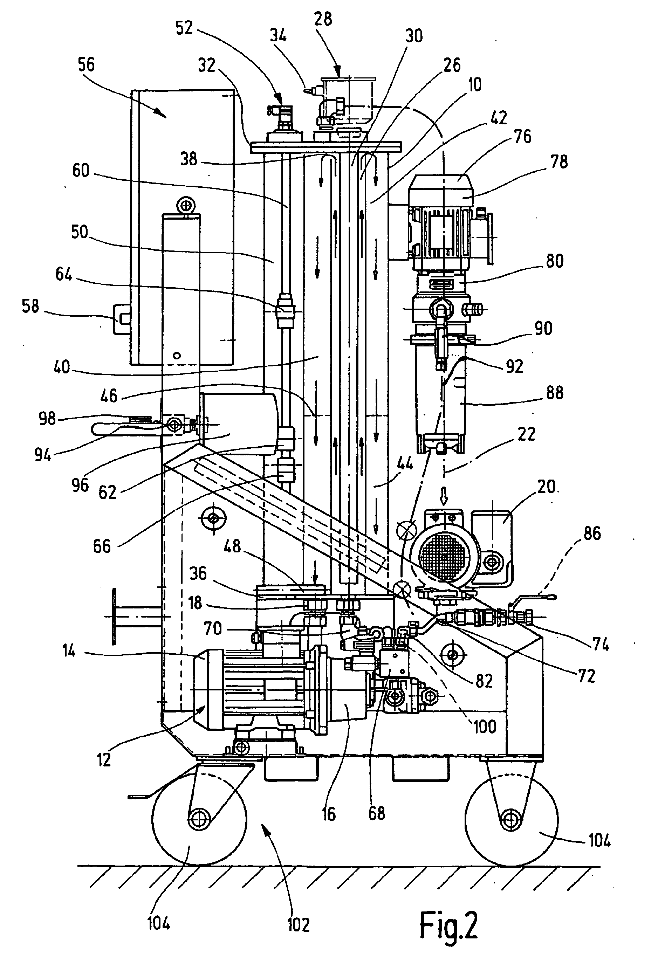

Die Vorrichtung zum Trennen von Fluidgemischen, insbesondere Wasser von Öl, weist einen Vakuumbehälter 10 auf, in den das Fluidgemisch, hier in Form des Öl/Wasser-Gemisches, einbringbar ist. Die flüssige Komponente des Fluidgemisches, hier in Form von Öl oder eines sonstigen Hydraulikmediums, ist nach erfolgter Auftrennung mittels einer als Ganzes mit 12 bezeichneten Fördereinrichtung aus dem Vakuumbehälter 10 abtransportierbar. Die dahingehende erste Fördereinrichtung 12 weist eine von einem Elektromotor 14 antreibbare Hydropumpe 16 auf. Für den dahingehenden Abtransport ist die erste Fördereinrichtung 12 über eine Rohrleitung 18 fluidführend an der Unterseite des Vakuumbehälters 10 angeschlossen. Des weiteren weist die Trennvorrichtung eine für dahingehende Verwendungen übliche Vakuumpumpe 20 auf, die über eine Verbindungsleitung 22, die in der Fig.2 nur teilweise dargestellt ist, im oberen Teil des Vakuumbehälters 10 an diesen fluidführend angeschlossen ist. Der Ausgang 24 der Vakuumpumpe 20 kann an einen nicht näher dargestellten Aufnahmebehälter oder an eine weitere Flüssigkeitsableitung (beides nicht dargestellt) angeschlossen sein. Sofern die Vakuumpumpe 20 Luft an die Umgebung abzuführen hat, kann eine entsprechende, nicht näher dargestellte Abgabevorrichtung vorhanden sein. Mittels der Vakuumpumpe 20 läßt sich jedenfalls aus dem Vakuumbehälter 10 Wasserdampf in Form von Gas und/oder in Form von Dampf aus dem Vakuumbehälter 10 sicher abführen. Wie sich aus der Fig.2 ergibt, ist die erste Fördereinrichtung 12 der Trennvorrichtung unterhalb des Vakuumbehälters 10 als Baueinheit angeordnet. Die Vakuumpumpe 20 wiederum ist in Blickrichtung auf die Fig.2 gesehen rechts davon und oberhalb dieser Fördereinrichtung 12 sowie gleichfalls außerhalb des Vakuumbehälters 10 als modulare Komponente Bestandteil der Trennvorrichtung.

Wie sich aus der Fig.2 ergibt, ist der Vakuumbehälter 10 in mehrere Teilräume aufgeteilt. Der erste Teilraum 26 erstreckt sich außermittig längs des gesamten Vakuumbehälters 10 und ist in der Art eines Hohlzylinders ausgebildet. Innerhalb dieses ersten Teilraumes 26 befindet sich als Teil einer Heizeinrichtung 28 ein elektrisch beheizbarer Heizstab 30. Der Heizstab 30, der gleichfalls eine zylindrische Außenkontur hat, greift unter Beibehalten eines radialen Abstandes in den ersten Teilraum 26 ein, wobei der derart hergestellte Abstand dem Fluidtransport des noch zu trennenden Fluidgemisches dient. Die Transportrichtung des Fluidgemisches innerhalb des ersten Teilraumes 26 ist mit entsprechenden Pfeilen angedeutet. Der Heizstab 30 selbst ist in Blickrichtung auf die Fig.2 gesehen mit seinem oberen Ende durch eine Abschlußplatte 32 des Vakuumbehälters 10 gehalten, wobei der Heizstab 30 als Teil einer Heizeinrichtung mit einer elektrischen Versorgung 34 versehen ist.

Vom Prinzip her arbeitet der Heizstab 30 der Heizeinrichtung 28 in der Art einer elektrischen Widerstandsheizung, wie es von Tauchsiedern od. dgl. her bekannt ist. Der zylindrische erste Teilraum 26 hingegen steht in Blickrichtung auf die Fig.2 gesehen mit seinem unteren Ende auf einer unteren Endplatte 36 auf, die den Vakuumbehälter 10 nach unten hin abschließt. An seinem anderen Ende hingegen weist der erste Teilraum 26 mit seiner Außenwandung einen Abstand zu der oberen Abschlußplatte 32 auf, so daß über den derart gebildeten Trennspalt 38 das Fluidgemisch den ersten Teilraum 26 verlassen kann, um an einen zweiten weiteren Teilraum 40 abgegeben zu werden. Der dahingehende zweite Teilraum 40 ist koaxial zum ersten Teilraum 26 angeordnet und umfaßt diesen mit seiner zylindrischen Außenwand. Derart ist innerhalb des zweiten Teilraumes 40 ein Aufnahmeraum 42 gebildet, der der Aufnahme eines nicht näher dargestellten Füllkörperbettes dient. Ein dahingehendes Füllkörperbett kann beispielsweise aus einem Edelstahlmaterial mit einer Vielzahl von Einzelfäden od. dgl. bestehen, um so in der Art eines Rieselbettes die Oberfläche für das zu trennende Fluidgemisch zu erhöhen. Ferner wird die Verweildauer des aufzutrennenden Fluidgemisches im zweiten Teilraum 40 durch das Füllkörperbett erhöht, so daß im Hinblick auf diese längere Verweildauer vermehrt Zeit für den eigentlichen Trennvorgang zur Verfügung steht.

Durch die Integration der Heizeinrichtung 28 in den Vakuumbehälter 10 und insbesondere in den ersten Teilraum 26 wird nur ein geringer Anteil der Wärmemenge an die Umgebung abgegeben, so daß ein verbesserter Wirkungsgrad und eine verbesserte Entwässerungsgeschwindigkeit erreicht ist. Durch die Beheizung des Fluidgemisches ist eine bessere Auftrennung des Wasser/Öl-Gemisches über die Vakuumpumpe 20 möglich, die im übrigen mit dem freien Ende ihrer Verbindungsleitung 22 in den Vakuumbehälter 10 mündet, und zwar unmittelbar in den zweiten weiteren Teilraum 40 mit dem Füllkörperbett. Ist das in den ersten Teilraum 26 eingebrachte Fluidgemisch stark unterkühlt, besteht dergestalt auch die Möglichkeit, das aufzutrennende Fluidgemisch entsprechend zu erwärmen, was sich günstig für den Auftrennvorgang auswirkt. Des weiteren besteht dann auch die Möglichkeit, ausgesprochen zähfließendes Fluid, wie es bei tiefen Temperaturen auftritt, über die Trennvorrichtung zu behandeln.

In Fluidrichtung hinter und mithin unterhalb des zweiten Teilraumes 40 ist ein dritter Teilraum 44 angeordnet, der über eine Art Trenn- oder Lochblech 46 vom zweiten Teilraum 40 getrennt ist. Dergestalt kann sich das nicht näher dargestellte Füllkörperbett auf der Oberseite des Trenn- oder Lochbleches 46 abstützen und dennoch ist über die dahingehende Trenneinrichtung 46 der Abtransport der flüssigen vom Wasser befreiten Komponenten des Fluidgemisches an den dritten Teilraum 44 gewährleistet. Der dritte Teilraum 44 wiederum umfaßt gleichfalls in koaxialer Anordnung den ersten Teilraum 26 und schließt im übrigen von seinem Außendurchmesser her bündig mit dem Außendurchmesser des zweiten Teilraumes 40 ab. Die bereits angesprochene Rohrleitung 18, die in Verbindung steht mit der ersten Fördereinrichtung 12, greift demgemäß fluidführend mit ihrem anderen Ende in den dritten Teilraum 44 ein. Zweiter und dritter Teilraum 40 bzw. 44 erstrecken sich gemeinsam längs des gesamten Vakuumbehälters 10 und schließen bündig einmal mit der Abschlußplatte 32 und einmal mit der Endplatte 36 ab. Am unteren Ende des dritten Teilraumes 44 weist dieser jedoch eine Öffnung 48 auf, die eine fluidführende Verbindung mit einem weiteren vierten Teilraum 50 herstellt.

In Abhängigkeit der Gesamt-Füllstandssituation innerhalb des Vakuumbehälters 10 stellt sich im vierten Teilraum 50 ein entsprechendes Fluidniveau ein, wobei eine als Ganzes mit 52 bezeichnete Niveauüberwachungseinrichtung den dahingehenden Füllzustand überwacht und einregelt. Hierfür steht die Niveauüberwachungseinrichtung über einen elektrischen Anschluß angeordnet an der Oberseite der Abschlußplatte 32 mit einer als Ganzes mit 56 bezeichneten Steuereinrichtung in Verbindung, die auch über entsprechende Bedienfeldeingaben sowie eine Not-Aus-Funktion 58 verfügt.

Die genannte Niveauüberwachungseinrichtung 52 weist innerhalb des vierten Teilraumes 50 einen Längsstab 60 auf, längs dessen ein Schwimmer-Auftriebskörper verfahrbar angeordnet ist, und zwar in Abhängigkeit des jeweiligen Füllzustandes innerhalb des vierten Teilraumes 50, der einen Rückschluß zuläßt über die gesamte Füllstandssituation innerhalb des Vakuumbehälters 10 an Fluid. Der Schwimmer-Auftriebskörper ist wischen einer Minimum-Position 62 und einer Maximum-Position 66 verfahrbar. Das jeweilige Fluid-Niveau bewegt sich zwischen diesen Positionen 62 und 66 und des weiteren steht noch ein Not-Aus-Schwimmer 64 zur Sicherheit zur Verfügung. Über die Steuereinrichtung 56 überwachte Endlagenschalter (nicht dargestellt) tragen Sorge dafür, daß bei Erreichen des unteren Endlagenschalters und mithin bei einem niedrigen Füllstandsniveau innerhalb des Vakuumbehälters 10 die erste Fördereinrichtung 12 derart angesteuert wird, daß die den Vakuumbehälter 10 über den dritten Teilraum 44 verlassende flüssige Komponente wieder an den ersten Teilraum 26 mit der Heizeinrichtung 28 unmittelbar weitergeleitet wird. Hierfür steuert die Steuereinrichtung 56 ein 3/2-Wege-Schaltventil 68 an, das in seiner betätigten Stellung den fluidführenden Weg zwischen der Rohrleitung 18 und der Hydropumpe 16 zu einer Anschlußleitung 70 freigibt, die über die untere Endplatte 36 in den fluidführenden Bereich des ersten Teilraumes 26 ausschließlich mündet.

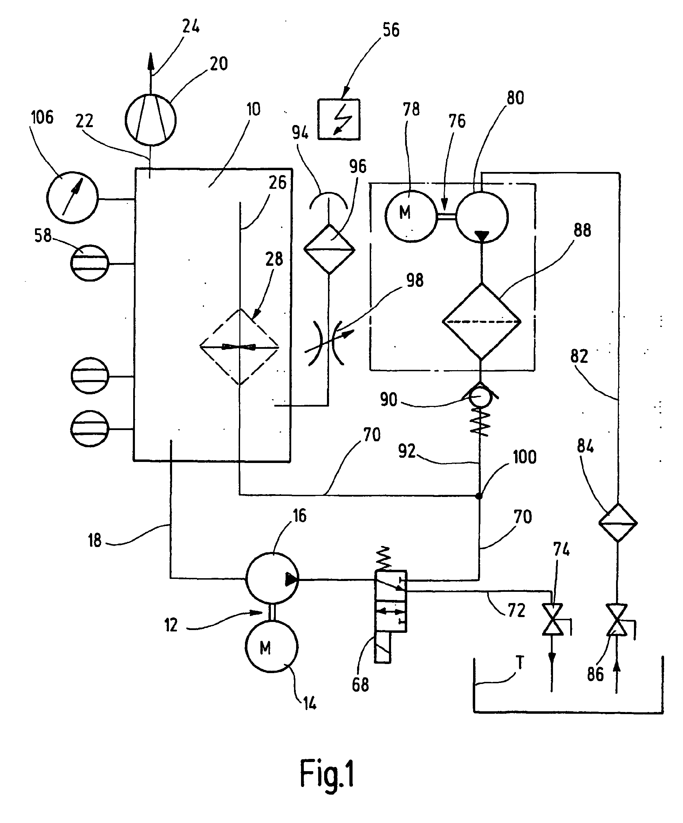

Erreicht der Schwimmer-Auftriebskörper den oberen Endlagenschalter, steuert die Niveauüberwachungseinrichtung 52 über die Steuereinrichtung 56 das 3/2-Wege-Schaltventil dergestalt an, daß es seine in der Fig.1 dargestellte unbetätigte Stellung beibehält, bei der die Rohrleitung 18 über die Hydropumpe 16 an eine Ablaufleitung 72, wie dargestellt, angeschlossen ist, die mit ihrem freien Ende über ein von Hand betätigbares Absperrventil 74 in eine Entnahmestelle, beispielsweise in Form eines Tanks T, mündet. Bei der dahingehenden Schaltstellung läßt sich sicherstellen, daß der Vakuumbehälter 10 mit seinen Teilräumen nicht überfüllt werden kann, sondern daß dann ein sicherer Abfluß in Richtung des Tanks T möglich ist. Mithin ist es über die Niveauüberwachungseinrichtung 52 sowie die Steuereinrichtung 56 möglich, den Befüllungs- und Arbeitszustand genau einzuregulieren, wobei bei Unterversorgung des Vakuumbehälters 10 im Sinne eines internen geschlossenen Rücklaufs bereits aufgetrenntes flüssiges Fluid in den ersten Teilraum 26 mit der Beheizungseinrichtung 28 rückgeführt wird.

Um die Versorgung des Vakuumbehälters 10 mit dem aufzutrennenden Fluidgemisch überhaupt sicherstellen zu können, weist die Trennvorrichtung des weiteren eine zweite Fördereinrichtung 76 auf, die wiederum über eine mittels eines Elektromotors 78 antreibbare Hydropumpe 80 verfügt. Die genannten Motoren 14 und 78 können selbstredend auch aus üblichen Hydromotoren bestehen. Die Hydropumpe 80 entnimmt über eine Entnahmeleitung 82 und einen Grobfilter 84 sowie über eine von Hand betätigbare weitere Absperreinrichtung 86 Fluid aus der Entnahmestelle in Form des Tanks T und gibt das derart geförderte wasserhaltige Fluidgemisch an eine Filtereinheit 88 weiter, die über ein federbelastetes Rückschlagventil 90 sicherstellt, daß nicht ungewollt in entgegengesetzter Richtung Fluid aus der Anschlußleitung 70 und über eine Förderleitung 92 zur Filtereinheit 88 rückströmen kann, was beispielsweise ansonsten möglich wäre, sofern die Hydropumpe 80 keinen ausreichenden Fluiddruck aufbauen würde. Über die dahingehende zweite Transport- oder Fördereinrichtung 76 ist die Versorgung des Vakuumbehälters 10, insbesondere die Versorgung des ersten Teilraumes 26 mit der Heizeinrichtung 28, aus der Entnahmestelle (Tank T) gewährleistet. Die Entnahmestelle oder der Tank T selbst kann wiederum fortlaufend aber auch diskontinuierlich mit aufzutrennendem Fluidgemisch von seiten der Arbeitsmaschine her versorgt werden.

Um zu vermeiden, daß in dem Vakuumbehälter 10 sich derart ein Unterdruck einstellt, daß der Betrieb der Gesamtvorrichtung in Frage gestellt wäre, ist vorgesehen, den Vakuumbehälter 10 an eine Luftzufuhr 94 anzuschließen, die über einen Luftfilter 96 verfügt sowie über eine einstellbare Drossel 98. Über die letztgenannte Drossel 98 läßt sich die Luftzufuhr in den Vakuumbehälter 10 vorgeben. Ferner ist über den Luftfilter 96 sichergestellt, daß nicht verunreinigte Umgebungsluft in den Vakuumbehälter 10 eindringen und dort das Auftrennverfahren beeinträchtigen könnte. Der fluidführende Anschluß 70 zu der Heizeinrichtung 28,30 und Teile der Fluidleitungen 92 der Fördereinrichtungen 12,76, die jeweils von einer Hydropumpe 16,80 versorgt sind, münden in ein gemeinsames Anschlußstück 100, das die Versorgung des Vakuumbehälters 10 einmal über die externe Zufuhr aus dem Tank T erlaubt und einmal über den inneren Umlauf in Abhängigkeit des Füllzustandes innerhalb des Vakuumbehälters 10. Wie sich des weiteren aus der Fig.2 ergibt, sind alle vorstehend genannten Komponenten der Vorrichtung verfahrbar in einer Transporteinheit 102 zusammengefaßt, wobei im vorliegenden Fall mittels eines Radsatzes 104, beispielsweise in Form von vier Einzelrädern, ein Transport auf einem Hallenboden, einem Fahrweg od. dgl., möglich ist. Auch ein schienen- oder luftkissenmäßiger Betrieb wäre denkbar.

Neben dem angesprochenen Entwässern eines Öl/Wasser-Gemisches ließe sich die Vorrichtung auch für vergleichbare Fluidgemische einsetzen, beispielsweise um Flugbenzin (Kerosin) in Tanks von Luftfahrzeugen von wässrigen Kondensaten zu befreien.

Neben der bereits angesprochenen automatischen Bedienung der Entwässerungsanlage ist es darüber hinaus möglich, über ein angeschlossenes Manometer 106 (vgl. Fig.1) die Drucksituation im Vakuumbehälter 10 zu überwachen, was auch der Sicherheit dient. Innerhalb des Vakuumbehälters 10 wird vorzugsweise eine Arbeitstemperatur von ca. 20°C bis ca. 60°C, je nach Anwendungsfall, gefahren sowie ein Absolutdruck von ca.22000 Pa (220 mbar) eingestellt, was einem Unterdruck von ca. 80000 Pa (0,8 bar) entspricht. Insgesamt wird die Vorrichtung derart eingestellt, daß ein Arbeitspunkt in der Nähe der Dampfdruckkurve von Wasser sich einstellt, der vorzugsweise geringfügig über der Dampfdruckkurve liegt. Ein Arbeitspunkt geringfügig über der Dampfdruckkurve ist technisch gut zu realisieren und ist energetisch in akzeptablen Grenzen. Im Bereich dieses Arbeitspunktes bzw. Arbeitsbereiches scheidet sich dann aus dem Öl-Wasser-Nebel im Bereich des Fließbettes der Wasserdampf aus, der über dem Absaugbereich mittels der Vakuumpumpe 20 aus dem Vakuumbehälter 10 ableitbar ist. Der Ölnebel selbst fällt auf der Unterseite des Fließbettes und mithin im Bereich des Trenn- oder Lochbleches 46 spätestens als Flüssigkeit aus und füllt zusehends den dritten Teilraum 44 und mithin auch den vierten Teilraum 50 der Niveauüberwachungseinrichtung 52.

Bei dem angesprochenen Auftrennungsprozeß wird neben einer Entwässerung des Öles auch eine Entgasung desselben erreicht, wobei sich die Gase ebenfalls im Absaugbereich der Vakuumpumpe 20 ansammeln und dergestalt aus dem Vakuumbehälter 10 mit abgeführt werden. Die Zuleitung des aufzutrennenden Fluidgemisches zum Heizstab 30 der Heizeinrichtung 28 im Vakuumbehälter 10 wirkt in der Art eines Wärmetauschers und wärmt das einströmende Fluidgemisch vor. Dies wirkt sich ebenfalls auf den Wirkungsgrad und die Entwässerungsgeschwindigkeit der erfindungsgemäßen Vorrichtung günstig aus, da nur eine begrenzte Wärmemenge pro Fläche auf das Fluidgemisch übertragen werden kann, ohne daß es zu Schädigungen kommt. Durch die Integration der Heizung in Gehäuseteilen des Vakuumbehälters 10 ist darüber hinaus eine platzsparende und gewichtsreduzierende Konstruktion erreicht.

Zum besseren Verständnis wird die Gesamtvorrichtung anhand ihrer Funktionsweise nun abschließend erläutert. Die Hydropumpe 80 saugt das aufzutrennende Fluidgemisch (Öl/Wasser-Gemisch) aus dem zu entwässernden Tank T und befüllt über ein Filter 88 und die Kammer mit dem Heizstab 30 den Vakuumbehälter 10. Es erfolgt dann mithin eine Filtration sowie eine Aufheizung des Fluidgemisches, sofern die Heizeinrichtung 28 seitens der Steuereinrichtung 56 in Betrieb genommen wurde. Aufgrund der Temperatur und des eingestellten Unterdruckes erfolgt im Vakuumbehälter 10 dann die Entwässerung des Öles. Gleichzeitig wird über die Hydropumpe 16 Öl aus dem Vakuumbehälter 10 gefördert, welches je nach Niveau-Schaltersignal der Niveauüberwachungseinrichtung 52 dem Vakuumbehälter 10 oder dem zu entwässernden Tank T zugeführt wird. Kommt es zu Störungen im Betrieb, insbesondere dadurch, daß der Vakuumbehälter 10 nicht mehr befüllt wird, kann die Niveauüberwachungseinrichtung 52 insbesondere über einen zuunterst im Vakuumbehälter 10 angeordneten Schalter die dahingehende vollständige Entleerungssituation für den Behälter 10 feststellen und dann eine Notabschaltung vornehmen, beispielsweise indem die Steuereinrichtung 56 die genannten Hydropumpen 16,80 abschaltet. Wie bereits dargelegt, wird über die Vakuumpumpe 20 die feuchte Luft aus dem Vakuumbehälter 10 abgesaugt und gleichzeitig läßt man über eine sog. Gasballastdrossel 98 gefilterte Raumluft in den Vakuumbehälter 10 über die Schnittstelle 94 sowie die Filtereinheit 96 nachströmen. Aufgrund der Druckerniedrigung im Vakuumbehälter 10 wird die Raumluft dann entspannt und der Wasserdampf- Partialdruck sinkt, so daß das Öl entwässert werden kann.

## Patentansprüche

1. Vorrichtung zum Trennen von Fluidgemischen, insbesondere Wasser von Öl, umfassend einen mehrere Teilräume (26,44,40) aufweisenden Vakuumbehälter (10), eine Fördereinrichtung (12), eine Vakuumpumpe (20) sowie ein Füllkörperbett, wobei mindestens eine flüssige Komponente des Fluidgemisches nach seiner Auftrennung aus dem Vakuumbehälter (10) mittels der Fördereinrichtung (12) abtransportierbar ist und die jeweils anderen Komponenten mittels der Vakuumpumpe (20) aus dem Vakuumbehälter (10) gas- und/oder dampfförmig absaugbar sind, wobei einer der Teilräume (26) des Vakuumbehälters (10) eine Heizeinrichtung (28,30) aufnimmt, die der Beheizung des Fluidgemisches dient, das an einen zweiten Teilraum (40) geleitet beim Durchströmen des Füllkörperbettes die Auftrennung in seine Komponenten erfährt, **dadurch gekennzeichnet, daß** der eine Teilraum (26) mit der integrierten Heizeinrichtung (28) sich längs des gesamten Vakuumbehälters (10) erstreckt, daß der zweite Teilraum (40) mit dem Füllkörperbett den ersten Teilraum (26) umfaßt und daß ein weiterer dritter Teilraum (44) koaxial zum zweiten Teilraum (40) und in Längsrichtung des Vakuumbehälters (10) diesem nachfolgend gleichfalls den ersten Teilraum (26) umfaßt.

2. Vorrichtung nach Anspruch 1, **dadurch gekennzeichnet, daß** in einem vierten Teilraum (50), der sich parallel zum ersten Teilraum (26) innerhalb des gesamten Vakuumbehälters (10) erstreckt, eine Niveauüberwachungseinrichtung (52) angeordnet ist, die Auskunft über den Füllzustand des Vakuumbehälters (10) bezogen auf die jeweils flüssige abzuführende Komponente gibt.

3. Vorrichtung nach Anspruch 2, **dadurch gekennzeichnet, daß** die Niveauüberwachungseinrichtung (52) die erste Fördereinrichtung (12) derart ansteuert, daß bei Unterschreiten einer vorgegebenen Füllstandsgrenze innerhalb des Vakuumbehälters (10) die flüssige, den Behälter (10) verlassende Komponente an den ersten Teilraum (26) mit der Heizeinrichtung (28) weitergeleitet ist.

4. Vorrichtung nach Anspruch 3, **dadurch gekennzeichnet, daß** eine weitere Fördereinrichtung (76) über eine Filtereinheit (88) das Fluidgemisch an einer Entnahmestelle (Tank T) entnimmt und daß die erste Fördereinrichtung (12) über eine Schalteinrichtung (68) alternativ zu der Abgabe an die Heizeinrichtung (28) die flüssige Komponente an die Entnahmestelle (T) abgibt.

5. Vorrichtung nach einem der Ansprüche 1 bis 4, **dadurch gekennzeichnet, daß** die Vakuumpumpe (20) mit ihrer Saugkraft an der Oberseite (32) des Vakuumbehälters (10) angreift und daß in einer gegenläufigen Richtung des Fluidgemisches von oben her der zweite Teilraum (40) mit dem Füllkörperbett durchströmt ist.

6. Vorrichtung nach einem der Ansprüche 1 bis 5, **dadurch gekennzeichnet, daß** der Vakuumbehälter (10) an eine Luftzufuhr (94) angeschlossen ist und zwar vorzugsweise über eine Luft-Filtereinheit (96) und eine einstellbare Drossel (98).

7. Vorrichtung nach einem der Ansprüche 4 bis 6, **dadurch gekennzeichnet, daß** der fluidführende Anschluß (70) zu der Heizeinrichtung (28) und Teile der Fluidleitung (18,92) der Fördereinrichtung (12,76), die jeweils von einer Hydropumpe (16,80) versorgt sind, in ein gemeinsames Anschlußstück (100) münden.

8. Vorrichtung nach einem der Ansprüche 1 bis 7, **dadurch gekennzeichnet, daß** die Heizeinrichtung (28) elektrisch betrieben ist.

9. Vorrichtung nach einem der Ansprüche 1 bis 8, **dadurch gekennzeichnet, daß** alle ihre Komponenten verfahrbar in einer Transporteinheit (102) zusammengefaßt sind.

## Claims

1. A device for separating fluid mixtures, in particular water from oil, comprising a vacuum container (10) having a number of sub-chambers (26, 44, 40), a conveying device (12), a vacuum pump (20) and a packed bed, it being possible to convey away at least one liquid component of the fluid mixture out of the vacuum container (10) after having been separated by means of the conveying device (12), and it being possible to suck out the respective other components from the vacuum container (10) in the form of gas and/or steam by means of the vacuum pump (20), one of the sub-chambers (26) of the vacuum container (10) accommodating a heating device (28, 30) which serves to heat the fluid mixture which, passed to a further second sub-chamber (40), undergoes separation into its components upon flowing through the packed bed, **characterised in that** the one sub-chamber (26) with the integrated heating device (28) extends along the whole vacuum container (10), that the second sub-chamber (40) with the packed bed comprises the first sub-chamber (26), and that a further third sub-chamber (44) coaxial to the second sub-chamber (40) and following the latter in the longitudinal direction of the vacuum chamber (10) likewise comprises the first sub-chamber (26).

2. The device according to Claim 1, **characterised in that** there is disposed in a fourth sub-chamber (50), which extends parallel to the first sub-chamber (26) within the whole vacuum container (10), a level monitoring device (52) which provides information on the fullness of the vacuum container (10) in relation to the respective liquid component to be discharged.

3. The device according to Claim 2, **characterised in that** the level monitoring device (52) controls the first conveying device (12) such that if a specified filling limit within the vacuum container (10) is fallen short of, the liquid component leaving the container (10) is passed on to the first sub-chamber (26) with the heating device (28).

4. The device according to Claim 3, **characterised in that** a further conveying device (76) extracts the fluid mixture at an extraction point (tank T) by means of a filter unit (88), and that the first conveying device (12) dispenses the liquid component to the extraction point (T) by means of a switching device (68) as an alternative to dispensing to the heating device (28).

5. The device according to any of Claims 1 to 4, **characterised in that** the vacuum pump (20) engages by means of its suction force with the upper side (32) of the vacuum container (10), and that the fluid mixture flows through the second sub-chamber (40) with the packed bed in the opposite direction from the top.

6. The device according to any of Claims 1 to 5, **characterised in that** the vacuum container (10) is connected to an air supply (94), and preferably via an air filter unit (96) and an adjustable regulator (98).

7. The device according to Claims 4 to 6, **characterised in that** the fluid-conveying connection (70) to the heating device (28) and parts of the fluid line (18, 92) of the conveying device (12, 76), which are respectively supplied by a hydraulic pump (16, 80), open out into a common connection piece (100).

8. The device according to any of Claims 1 to 7, **characterised in that** the heating device (28) is operated electrically.

9. The device according to any of Claims 1 to 8, **characterised in that** all of its components are integrated moveably into a conveyance unit (102).

## Revendications

1. Dispositif de séparation de mélanges de fluides pour séparer notamment de l'eau de l'huile, comprenant un récipient (10) sous vide ayant plusieurs sous-espaces (26, 44, 40), un dispositif (12) convoyeur, une pompe (20) à vide ainsi qu'un lit de corps de remplissage, dans lequel au moins un constituant liquide du mélange de fluide peut, après la séparation, être évacué du récipient (10) sous vide au moyen du dispositif (12) convoyeur et les autres constituants respectifs peuvent être aspirés sous forme de gaz et/ou de vapeur du récipient (10) sous vide au moyen de la pompe (20) à vide, dans lequel l'un des sous-espaces (26) du récipient (10) sous vide reçoit un dispositif (28, 30) de chauffage qui sert à chauffer le mélange de fluides qui, envoyé à un sous-espace (40) en passant à travers le lit de corps de remplissage, subit la séparation en ses constituants, **caractérisé en ce que** le un sous-espace (26) s'étend, avec le dispositif (28) de chauffage intégré, le long de tout le récipient (10) sous vide en ce que le deuxième sous-espace (40), ayant le lit de corps de remplissage, entoure le premier sous-espace (26) et **en ce qu'**un autre troisième sous-espace (44) entoure, coaxialement au deuxième sous-espace (40) et en le suivant dans la direction longitudinale du récipient (10) sous vide, également le premier sous-espace (26).

2. Dispositif suivant la revendication 1, **caractérisé en ce que** l'on met dans un quatrième sous-espace (50), qui s'étend parallèlement au premier sous-espace (26) à l'intérieur de tout le récipient (10) sous vide, un dispositif (52) de contrôle du niveau, qui donne des renseignements sur le niveau de remplissage du récipient (10) sous vide rapporté au constituant liquide à évacuer.

3. Dispositif suivant la revendication 2, **caractérisé en ce que** le dispositif (52) de contrôle du niveau commande le premier dispositif (12) convoyeur de manière à ce que, lorsque l'on passe en dessous d'une limite de niveau prescrite dans le récipient (10) sous vide, le constituant liquide quittant le récipient (10) est acheminé vers le premier sous-espace (26) ayant le dispositif (28) de chauffage.

4. Dispositif suivant la revendication 3, **caractérisé en ce qu'**un autre dispositif (76) convoyeur prélève, par l'intermédiaire d'une unité (88) de filtration, le mélange de fluide en un point de prélèvement (cuve T) et **en ce que** le premier dispositif (12) convoyeur cède, par un dispositif (68) de commutation, en alternance à la cession au dispositif (28) de chauffage, le constituant liquide au point (T) de prélèvement.

5. Dispositif suivant l'une des revendications 1 à 4, **caractérisé en ce que** la pompe (20) à vide attaque, par sa force d'aspiration, le côté (32) supérieur du récipient (10) sous vide et **en ce que** le deuxième sous-espace (40), ayant le lit de corps de remplissage, est parcouru dans un sens opposé du mélange de fluides à partir du haut.

6. Dispositif suivant l'une des revendications 1 à 5, **caractérisé en ce que** le récipient (10) sous vide est raccordé à une entrée (94) d'air et cela, de préférence, par une unité (96) de filtration de l'air et par un étranglement (98) réglable.

7. Dispositif suivant l'une des revendications 4 à 6, **caractérisé en ce que** le raccord (74) de conduite de fluide débouche sur le dispositif (28) de chauffage et les parties de conduit (18, 92) pour du fluide du dispositif (12, 76) convoyeur, qui sont alimentées respectivement par une pompe (16, 80) hydraulique, débouchent dans une pièce (10) de raccordement commune.

8. Dispositif suivant l'une des revendications 1 à 7, **caractérisé en ce que** le dispositif (28) de chauffage fonctionne électriquement.

9. Dispositif suivant l'une des revendications 1 à 8, **caractérisé en ce que** tout ses éléments peuvent être transportés ensemble dans une unité (102) itinérante.
